# FASCICULE DE BREVET EUROPEEN

(11) **EP 3 132 561 B1**
(45) Date de publication et mention de la délivrance du brevet: **02.01.2019**
(21) Numéro de dépôt: 15716778.4
(22) Date de dépôt: 14.04.2015
(51) Int. Cl.: H04L 9/32, H04L 29/06, H04W 12/08, H04L 12/28, H04B 3/54, H04W 84/12, H04L 12/24, H04W 4/80

(54) **ENSEMBLE DE DISPOSITIFS ÉLECTRONIQUES DESTINÉS À ÊTRE RACCORDÉS À AU MOINS UN RÉSEAU INFORMATIQUE ET PROCÉDÉ DE TRANSFERT DE DONNÉES NUMÉRIQUES DANS CET ENSEMBLE**
ANORDNUNG VON ELEKTRONISCHEN VORRICHTUNGEN ZUR VERBINDUNG MIT MINDESTENS EINEM RECHNERNETZ UND VERFAHREN ZUR ÜBERTRAGUNG DIGITALER DATEN IN DIESER ANORDNUNG
ASSEMBLY OF ELECTRONIC DEVICES INTENDED TO BE CONNECTED TO AT LEAST ONE COMPUTER NETWORK AND METHOD OF TRANSFERRING DIGITAL DATA IN THIS ASSEMBLY

(30) Priorité: 15.04.2014 FR 1453376
(43) Date de publication de la demande: 22.02.2017
(73) Titulaire: Devialet, 75001 Paris (FR)
(72) Inventeur: COQUERET, Charles, F-75012 Paris (FR); CALMEL, Pierre-Emmanuel, F-78150 Le Chesnay (FR)
(74) Mandataire: Lavoix
(86) Numéro de dépôt international: PCT/EP2015/058073
(87) Numéro de publication internationale: WO 2015/158712

(56) Documents cités:
- EP-A1- 1 450 513
- CN-A- 102 769 847
- US-A1- 2013 223 279
- US-A1- 2013 254 519
- US-A1- 2013 337 739

## Description

La présente invention concerne un ensemble de dispositifs électroniques destinés à être raccordés à au moins un réseau informatique, du type comportant un dispositif émetteur de données numériques comprenant un module principal de communication avec le réseau informatique et un module secondaire de communication radioélectrique à courte distance, le dispositif émetteur étant apte à générer des données numériques ; et au moins un dispositif récepteur de données numériques comprenant un module principal de communication avec le réseau informatique et un module secondaire de communication radioélectrique à courte distance, le dispositif récepteur étant apte à utiliser les données numériques générées par le dispositif émetteur.

La présente invention concerne également un procédé de transfert de données numériques dans cet ensemble.

Un tel réseau informatique est généralement un réseau informatique sans fil basé par exemple sur un protocole conforme à la norme IEEE 802.11 ou un réseau filaire basé par exemple sur un protocole de type ETHERNET ou CPL (abréviation de « courants porteurs en ligne »).

Le procédé de transfert de données numériques est par exemple un procédé d'établissement d'une connexion sécurisée au réseau informatique dans l'ensemble de dispositifs électroniques. Dans ce cas, les données numériques comprennent des données de configuration du réseau permettant d'établir une telle connexion.

Il existe dans l'état de la technique différents systèmes et/ou méthodes informatiques permettant de simplifier la phase d'établissement d'une connexion sécurisée d'un dispositif électronique à un réseau informatique.

Ceci est notamment le cas des réseaux informatiques sans fil basés sur un protocole conforme à la norme IEEE 802.11 et des dispositifs électroniques « intelligents » nécessitant de configurations particulières pour accéder à ces réseaux en toute sécurité.

Ainsi, par exemple, le protocole WPS (de l'anglais « Wi-Fi Protected Setup ») permet à un utilisateur ayant peu de connaissances sur la sécurité informatique de configurer rapidement un dispositif électronique pour que celui-ci puisse se connecter au réseau via un point d'accès prédéterminé.

Plus particulièrement, ce protocole propose une méthode dans laquelle l'utilisateur pousse un bouton physique ou virtuel, à la fois sur le point d'accès et sur le dispositif électronique. Ceci permet d'enlever la sécurité du réseau informatique pendant un court moment afin que le dispositif électronique puisse recevoir en « libre accès » des données de configuration requises pour établir une connexion permanente avec le réseau.

Une méthode analogue existe également pour des réseaux filaires de type CPL et consiste à appuyeur simultanément sur des boutons prévus à cet effet sur chaque extrémité du réseau.

Une faille majeure de cette méthode réside dans l'impossibilité de sécuriser le réseau quand les deux boutons sont appuyés, et les données de configuration sont alors en « libre accès ». Ainsi, ces données de configuration peuvent être transmises à n'importe quel autre dispositif électronique couvert par ce réseau et étant apte à recevoir ces données.

Le protocole WPS propose en outre une méthode basée sur la technologie de communication en champ proche (NFC, de l'anglais « Near Field Communication ») permettant à l'utilisateur d'approcher physiquement le dispositif électronique du point d'accès pour pouvoir configurer le dispositif électronique en échangeant les données de configuration du réseau dans le champ proche du point d'accès.

Toutefois, cette solution n'est pas complètement satisfaisante. En particulier, la méthode de connexion basée sur la technologie NFC ne permet pas de configurer rapidement deux dispositifs électroniques disposés physiquement dans des endroits différents et étant éventuellement encombrants, ou plus de deux dispositifs. De plus, cette technologie étant applicable majoritairement aux réseaux sans fil conformes à la norme IEEE 802.11, reste difficilement adaptable à d'autres types de réseaux, y compris les réseaux filaires de type CPL.

À ce sujet, les documents EP 1 450 513 A1, CN 102 769 847 et US 2013/254519 A1 décrivent un ensemble de dispositifs électroniques destinés à être raccordés à un réseau informatique, comportant un dispositif émetteur, un dispositif récepteur et un dispositif transmetteur.

La présente invention a pour but de proposer un ensemble de dispositifs électroniques et un procédé de transfert de données numériques dans cet ensemble permettant d'établir rapidement et facilement une connexion sécurisée entre un point d'accès et une pluralité de dispositifs électroniques potentiellement encombrants et ceci indépendamment du type de réseau les raccordant.

À cet effet, l'invention a pour objet un ensemble de dispositifs électroniques conforme à la revendication 1., comportant en outre un dispositif transmetteur de données numériques portable et comprenant un processeur ; une mémoire apte à stocker les données numériques et au moins un logiciel de pilotage du dispositif transmetteur exécuté

Suivant d'autres aspects avantageux de l'invention, l'équipement comprend une ou plusieurs des caractéristiques des revendications 2 à 9.

L'invention a également pour objet un procédé de transfert de données numériques conforme à la revendication 10.

L'invention sera mieux comprise à la lecture de la description qui va suivre, donnée uniquement à titre d'exemple et faite en se référant aux dessins annexés, sur lesquels :
- la figure 1 est une vue schématique d'un ensemble de dispositifs électroniques selon l'invention, l'ensemble comportant un dispositif transmetteur ; et
- la figure 2 est une vue schématique du dispositif transmetteur de l'ensemble de dispositifs électroniques représenté sur la figure 1.

Dans la présente description, on entend par « courte distance » par exemple toute distance inférieure à 10 cm.

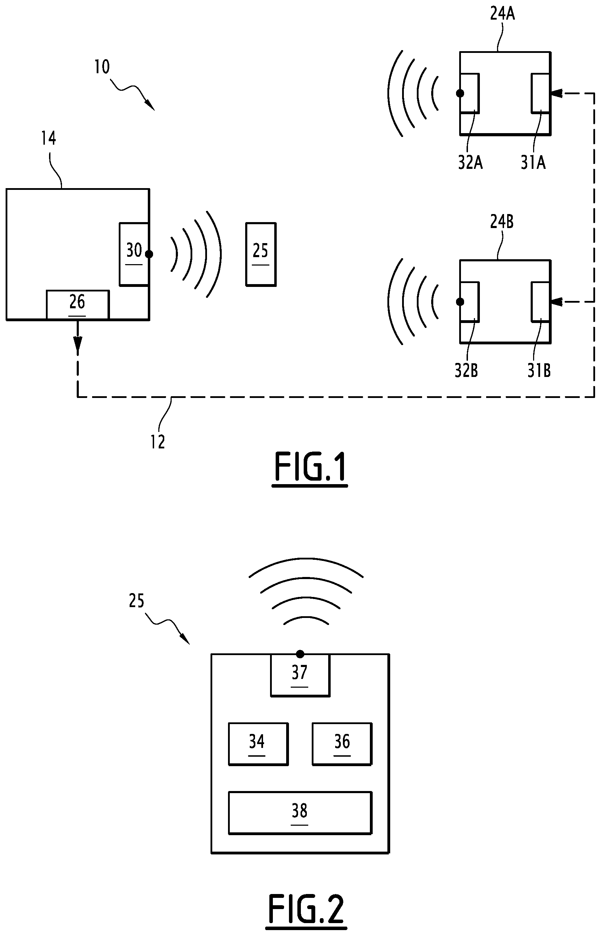

Un ensemble 10 de dispositifs électroniques est illustré sur la figure 1.

L'ensemble 10 comporte une pluralité de dispositifs électroniques destinés à être raccordés à un réseau informatique 12.

L'ensemble 10 est par exemple un système acoustique.

L'ensemble 10 comporte un dispositif émetteur 14 apte à générer des données numériques, deux dispositifs récepteurs 24A et 24B aptes à utiliser les données numériques générées par le dispositif émetteur 14, et un dispositif transmetteur 25 permettant de transmettre au moins certaines des données numériques générées du dispositif émetteur 14 à chacun des dispositifs 24A et 24B en évitant le réseau informatique 12.

Le réseau informatique 12 comprend un réseau informatique filaire connu en soi dans l'état de la technique et apte à transmettre des données numériques entre différents dispositifs électroniques selon un protocole adapté.

Le réseau informatique 12 illustré sur la figure 1 est un réseau filaire compatible avec un protocole de type CPL (abréviation de « courants porteurs en ligne ») et permettant de transmettre des données numériques via des câbles électriques faisant partie d'un même circuit d'alimentation électrique. Un tel circuit d'alimentation électrique est intégré par exemple dans le domicile d'un utilisateur.

Selon une autre variante de réalisation, le réseau informatique 12 est un réseau sans fil compatible avec un protocole de la norme IEEE 802.11 et permettant de transmettre des données numériques sous la forme d'ondes radioélectriques.

Selon encore une autre variante, le réseau informatique 12 comprend plusieurs sous-réseaux informatiques de types différents. Ainsi, par exemple, le réseau informatique 12 comprend un sous-réseau filaire de type CPL et un sous-réseau sans fil conforme à la norme IEEE 802.11.

Dans toutes les variantes de réalisation, le réseau informatique 12 est un réseau sécurisé nécessitant d'une identification pour chaque dispositif électronique raccordé. Autrement dit, chaque dispositif électronique raccordé à ce réseau 12 est apte à passer par une phase d'établissement d'une connexion sécurisée à ce réseau 12 pour y accéder et pour pouvoir envoyer et/ou recevoir des données numériques.

Le fonctionnement du réseau informatique 12 est piloté par l'un des dispositifs électroniques de l'ensemble 10.

Le dispositif émetteur 14 est par exemple un serveur et/ou un lecteur et/ou un amplificateur acoustique adapté pour émettre dans le réseau 12 des données numériques associées à des ondes sonores.

Le dispositif émetteur 14 est apte en outre à piloter le fonctionnement du réseau informatique 12 et en particulier, à générer des données numériques comprenant des données de configuration permettant aux autres dispositifs électroniques de l'ensemble 10 d'accéder au réseau informatique 12.

Les données de configuration incluent par exemple des données de sécurité ou un ou plusieurs mots de passe donnant accès au réseau informatique 12.

Les données de configuration sont aptes à être transmises par le dispositif transmetteur 25 en évitant le réseau 12 comme ceci sera expliqué par la suite.

Le dispositif émetteur 14 comporte un module principal 26 de communication avec le réseau 12, et un module secondaire 30 de communication radioélectrique à courte distance.

Le module principal de communication 26 permet au dispositif émetteur 14 d'émettre les données numériques générées dans le réseau 12 et, éventuellement de recevoir d'autres données numériques issues du réseau 12.

Le module secondaire de communication 30 permet au dispositif émetteur 14 de communiquer avec d'autres dispositifs électroniques comportant un module de communication radioélectrique du même type et se trouvant dans un champ de couvrement du module secondaire de communication 30.

Le module secondaire de communication 30 permet ainsi d'émettre les données numériques générées, en particulier les données de configuration, dans son champ de couvrement sous la forme d'ondes radioélectriques.

Le module secondaire de communication 30 est apte à définir son champ de couvrement.

Selon un exemple de réalisation, pour définir son champ de couvrement, le module secondaire de communication 30 est apte à mesurer un niveau de puissance des ondes radioélectriques émises par d'autres modules de communication à proximité du module secondaire de communication 30, et à traiter uniquement des ondes radioélectriques avec un niveau de puissance supérieur à un seuil prédéterminé. Ainsi, ce seuil prédéterminé définit le champ de couvrement du module secondaire de communication 30.

Selon un autre exemple de réalisation, pour définir son champ de couvrement, le module secondaire de communication 30 est apte à émettre des ondes radioélectriques avec un niveau de puissance inférieur à un seuil prédéterminé. Ainsi, ce seuil prédéterminé définit le champ de couvrement du module secondaire de communication 30.

Bien entendu, d'autres méthodes de définition du champ de couvrement en fonction de la puissance des ondes reçues et/ou émises sont également possibles.

Le champ de couvrement du module secondaire de communication 30 est limité par exemple par une sphère de rayon inférieur à 10 cm.

Le module secondaire de communication 30 est compatible avec un protocole de communication basé sur la norme IEEE 802.15.4 et connu en soi dans l'état de la technique.

Chaque dispositif récepteur 24A ou 24B est par exemple une enceinte acoustique « intelligente » apte à émettre des ondes sonores à partir des données numériques générées par le dispositif émetteur 14 et reçues via le réseau informatique 12.

Chaque dispositif récepteur 24A ou 24B comporte un module principal 31A ou 31B de communication avec le réseau 12 et un module secondaire 32A ou 32B de communication radioélectrique à courte distance.

Chaque module principal de communication 31A ou 31B permet au dispositif récepteur 24A ou 24B correspondant de recevoir via le réseau 12 les données numériques générées par le dispositif émetteur 14 et, éventuellement d'émettre d'autres données numériques dans le réseau 12.

De manière analogue au module secondaire de communication 30 du dispositif émetteur 14, chaque module secondaire de communication 32A ou 32B permet la communication radioélectrique avec un module de communication radioélectrique du même type se trouvant dans un champ de couvrement du module secondaire de communication 32A ou 32B.

Chaque module secondaire de communication 32A ou 32B permet notamment de recevoir certaines des données numériques, en particulier les données de configuration générées par le dispositif émetteur 14 et transmises par le dispositif transmetteur 25 sous la forme d'ondes radioélectriques.

Chaque module secondaire de communication 32A ou 32B est apte à définir son champ de couvrement selon l'une des méthodes précitées et est compatible avec un protocole de communication basé sur la norme IEEE 802.15.4.

Le champ de couvrement de chacun des modules secondaires de communication 32A et 32B est limité par exemple par une sphère de rayon inférieur à 10 cm.

Le dispositif transmetteur 25 est représenté plus en détail sur la figure 2.

Sur la figure 2, le dispositif transmetteur 25 comporte un processeur 34, une mémoire 36, un module unique 37 de communication radioélectrique à courte distance, et une source 38 d'alimentation électrique.

Le module unique de communication 37 est un module de communication radioélectrique à courte distance analogue à chacun des modules secondaires 30, 32A ou 32B de communication décrits précédemment.

Ainsi, le module unique de communication 37 permet de communiquer avec d'autres modules de communication radioélectrique du même type se trouvant dans son champ de couvrement.

Le module unique de communication 37 permet notamment de recevoir certaines des données numériques, en particulier les données de configuration générées, et émises par le dispositif émetteur 14 sous la forme d'ondes radioélectriques, et d'émettre ces données numériques à destination de chacun des dispositifs récepteurs 24A ou 24B sous la forme d'ondes radioélectriques.

Le module unique de communication 37 de communication est apte à définir son champ de couvrement selon l'une des méthodes précitées et est compatible avec un protocole de communication basé sur la norme IEEE 802.15.4.

Le champ de couvrement du module unique de communication 37 est limité par exemple par une sphère de rayon inférieur à 10 cm.

La mémoire 36 est apte à stocker les données numériques, en particulier les données de configuration reçues.

La mémoire 36 est apte à stocker en outre au moins un logiciel de pilotage. Ce logiciel de pilotage est mis en oeuvre par le processeur 34 et permet notamment de piloter le fonctionnement du dispositif transmetteur 25.

La source d'alimentation 38 est apte à alimenter électriquement le processeur 34, la mémoire 36 et le module unique de communication 37. La source d'alimentation 38 est par exemple une batterie.

Le dispositif transmetteur 25 est un dispositif portable qui se présente par exemple sous la forme d'un boitier de dimensions inférieures à 20 cm. Ce boitier présente une forme ergonomique et est adapté pour être facilement déplacé par l'utilisateur.

Le procédé de transfert de données numériques selon l'invention va maintenant être décrit. Dans l'exemple décrit ci-dessous, les données numériques comprennent des données de configuration.

Ainsi, selon cet exemple, le procédé de transfert permet d'établir une connexion sécurisée dans l'ensemble 10 de dispositifs électroniques.

Pour établir une connexion sécurisée de chacun des dispositifs récepteurs 24A et 24B au réseau informatique 12, le dispositif transmetteur 25 échange des données de configuration avec le dispositif émetteur 14 et avec chaque dispositif récepteur 24A ou 24B en évitant le réseau informatique 12. Ces échanges s'effectuent via des ondes radioélectriques.

Initialement, le dispositif émetteur 14, le dispositif transmetteur 25 et les dispositifs récepteurs 24A et 24B sont fournis. Le réseau informatique 12 est initialisé par le dispositif émetteur 14.

Lors d'une étape suivante, le dispositif émetteur 14 génère des données de configuration relatives à ce réseau 12 et permettant aux dispositifs récepteurs 24A et 24B d'établir une connexion sécurisée à ce réseau 12.

Lors d'une étape suivante, un utilisateur approche le dispositif transmetteur 25 du dispositif émetteur 14 de sorte que le dispositif transmetteur 25 se trouve dans le champ de couvrement du module secondaire de communication 30 du dispositif émetteur 14.

Lorsqu'une connexion radioélectrique à courte distance est établie entre le dispositif émetteur 14 et le dispositif transmetteur 25, le dispositif émetteur 14 émet des ondes radioélectriques correspondant aux données de configuration générées.

Le dispositif transmetteur 25 récupère ainsi ces données de configuration et les stocke dans la mémoire 36.

Lors d'une étape suivante, l'utilisateur approche le dispositif transmetteur 25 de l'un des dispositifs récepteurs 24A et 24B, de sorte que le dispositif transmetteur 25 se trouve dans le champ de couvrement du module secondaire de communication 32A ou 32B de ce dispositif récepteur 24A ou 24B.

Lorsqu'une connexion radioélectrique à courte distance est établie entre le dispositif transmetteur 25 et le dispositif récepteur 24A ou 24B, le dispositif transmetteur émet des ondes radioélectriques correspondant aux données de configuration stockées dans sa mémoire 36.

Le dispositif récepteur 24A ou 24B récupère ainsi ces données de configuration et les applique pour établir une connexion sécurisé au réseau informatique 12.

De manière analogue, une connexion sécurisée de l'autre dispositif récepteur 24A ou 24B au réseau 12 est établie lorsque l'utilisateur approche le dispositif transmetteur 25 de ce dispositif récepteur 24A ou 24B

Bien entendu, lorsque l'ensemble 10 comporte plus de dispositifs émetteurs, une connexion sécurisée au réseau informatique de chacun entre eux est établie de la même manière.

L'échange des données numériques autres que les données de configuration entre le dispositif émetteur 14 et chacun des dispositifs récepteurs 24A ou 24B via le dispositif transmetteur 25, s'effectue de la même façon.

Selon un exemple de réalisation, chacun du dispositif émetteur 14 et des dispositifs récepteurs 24A et 24B présente un boitier comportant une zone de contact disposée à proximité du module secondaire de communication 30, 32A ou 32B correspondant.

Selon cet exemple de réalisation, les modules secondaires de communication 30, 32A et 32B sont aptes à communiquer avec le module unique de communication 37 lorsque le dispositif transmetteur 25 est en contact avec la zone de contact correspondante.

Dans cet exemple de réalisation, le champ de couvrement de chacun des modules secondaires de communication est limité par la zone de contact correspondante.

Ainsi, dans le procédé d'établissement d'une connexion sécurisée pour l'ensemble 10 selon cet exemple de réalisation, les étapes consistant à approcher le dispositif transmetteur 25 de chacun des dispositifs récepteurs 14, 24A et 24B, comprennent la mise en contact du dispositif transmetteur 14 avec la zone de contact correspondante.

L'ensemble 10 de dispositifs électroniques et le procédé d'établissement d'une connexion sécurisée dans cet ensemble comportent un certain nombre d'avantages.

En particulier, le dispositif transmetteur 25 permet d'établir facilement une connexion sécurisée de chacun des dispositifs récepteurs 24A et 24B à un ou plusieurs réseaux informatiques 12.

Cette connexion s'effectue de manière particulièrement simple, juste en touchant ou rapprochant le dispositif transmetteur 25 du dispositif récepteur 24A ou 24B correspondant. Ceci garantit un haut niveau de sécurité de la connexion et permet en outre de connecter rapidement un grand nombre de dispositifs récepteurs 24A et 24B.

De plus, le procédé d'établissement d'une telle connexion sécurisée ne dépend pas du type du réseau informatique 12 et permet de connecter les dispositifs récepteurs 24A ou 24B à plusieurs réseaux de types différents.

Finalement, le dispositif transmetteur 25 permet avantageusement de transmettre tout type de données numériques en toute sécurité entre un dispositif émetteur 14 et un ou plusieurs dispositifs récepteurs 24A ou 24B en évitant le réseau informatique 12 principal.

## Revendications

1. Ensemble (10) de dispositifs électroniques destinés à être raccordés à au moins un réseau informatique (12), du type comportant :
- un dispositif émetteur (14) de données numériques comprenant un module principal (26) de communication avec le réseau informatique (12) et un module secondaire (30) de communication radioélectrique à courte distance, le dispositif émetteur (14) étant apte à générer des données numériques ;
- au moins un dispositif récepteur (24A ; 24B) de données numériques comprenant un module principal (31A ; 31B) de communication avec le réseau informatique (12) et un module secondaire (32A ; 32B) de communication radioélectrique à courte distance, le dispositif récepteur (24A ; 24B) étant apte à utiliser les données numériques générées par le dispositif émetteur (14) ;
**caractérisé** :
- **en ce qu'**il comporte en outre un dispositif transmetteur (25) de données numériques portable et comprenant :
- un processeur (34) ;
- une mémoire (36) apte à stocker les données numériques et au moins un logiciel de pilotage du dispositif transmetteur (25) exécuté par ledit processeur (34) ;
- un module unique (37) de communication radioélectrique à courte distance apte à communiquer avec le module secondaire de communication (30) du dispositif émetteur (14) pour récupérer les données numériques générées par le dispositif émetteur (14) pour les stocker dans ladite mémoire (36) lorsque le dispositif transmetteur (25) est à proximité du dispositif émetteur (14), et avec le module secondaire de communication (32A ; 32B) du dispositif récepteur (24A ; 24B) pour transmettre au dispositif récepteur (24A ; 24B) au moins certaines des données numériques stockées dans ladite mémoire (36) lorsque le dispositif transmetteur (25) est à proximité du dispositif récepteur (24A ; 24B) ;
- **en ce que** le dispositif émetteur (14) est apte à envoyer des données numériques vers le dispositif récepteur (24A ; 24B) via le réseau informatique (12) ; et
- **en ce que** le dispositif récepteur (24A ; 24B) est une enceinte acoustique apte à émettre des ondes sonores à partir des données numériques issues du dispositif émetteur (14) et délivrées par le réseau informatique (12).

2. Ensemble (10) selon la revendication 1, **caractérisé en ce que** le dispositif transmetteur (25) comporte en outre une source (38) d'alimentation électrique dudit processeur (34), de ladite mémoire (36) et dudit module de communication (37).

3. Ensemble (10) selon la revendication 1 ou 2, **caractérisé en ce que** le module unique de communication (37) du dispositif transmetteur (25) et les modules secondaires de communication (30 ; 32A ; 32B) du dispositif émetteur (14) et du dispositif récepteur (24A ; 24B) sont compatibles avec un protocole de communication conforme à la norme IEEE 802.15.4.

4. Ensemble (10) selon l'une quelconque des revendications précédentes, **caractérisé en ce que** le module unique de communication (37) du dispositif transmetteur (14) est apte à communiquer avec chacun des modules secondaires de communication radioélectrique (30 ; 32A ; 32B) du dispositif émetteur (14) et du dispositif récepteur (24A ; 24B) à une distance inférieure à 10 cm.

5. Ensemble (10) selon l'une quelconque des revendications précédentes, **caractérisé en ce que** chacun du module unique de communication (37) et des modules secondaires de communication (30 ; 32A ; 32B) est apte à définir un champ de couvrement dans lequel ce module de communication (37 ; 30 ; 32A ; 32B) est apte à communiquer avec les autres modules de communication (37 ; 30 ; 32A ; 32B) via des ondes radioélectriques.

6. Ensemble (10) selon l'une quelconque des revendications précédentes, **caractérisé** :
- **en ce que** chacun du dispositif émetteur (14) et du dispositif récepteur (24A ; 24B) comporte une zone de contact ; et
- **en ce que** le module unique de communication (37) du dispositif transmetteur (25) est apte à communiquer avec chacun des modules secondaires de communication radioélectrique (30 ; 32A ; 32B) du dispositif émetteur (14) et du dispositif récepteur (24A ; 24B) en étant en contact avec la zone de contact du dispositif émetteur (14) ou du dispositif récepteur (24A ; 24B).

7. Ensemble (10) selon l'une quelconque des revendications précédentes, **caractérisé en ce que** les modules principaux de communication (26 ; 31A ; 31B) du dispositif émetteur (14) et du dispositif récepteur (24A ; 24B) sont compatibles avec un protocole de communication conforme à la norme IEEE 802.11.

8. Ensemble (10) selon l'une quelconque des revendications précédentes, **caractérisé en ce que** les modules principaux de communication (26 ; 31A ; 31B) du dispositif émetteur (14) et du dispositif récepteur (24A ; 24B) sont compatibles avec un protocole de communication de type CPL.

9. Ensemble (10) selon l'une quelconque des revendications précédentes, **caractérisé en ce que** les données numériques générées par le dispositif émetteur (14) comprennent des données de configuration du réseau informatique (12) permettant au dispositif récepteur (24A ; 24B) d'établir une connexion sécurisée avec le réseau informatique (12).

10. Procédé de transfert de données numériques dans l'ensemble (10) de dispositifs électroniques selon l'une quelconque des revendications précédentes, **caractérisé en ce qu'**il comprend les étapes suivantes :
- génération de données numériques par le dispositif émetteur (14) ;
- récupération des données numériques par le dispositif transmetteur (25) et leur stockage dans la mémoire (36) après un rapprochement du dispositif transmetteur (25) du dispositif émetteur (14) effectué par un utilisateur ;
- récupération des données numériques par le dispositif récepteur (24A ; 24B) après un rapprochement du dispositif transmetteur (25) du dispositif récepteur (24A ; 24B) effectué par l'utilisateur ;
- utilisation des données numériques par le dispositif récepteur (24A ; 24B) ayant reçu ces données numériques.

## Patentansprüche

1. Anordnung (10) von elektronischen Vorrichtungen, die dazu vorgesehen sind, mit mindestens einem Computernetzwerk (12) verbunden zu werden, vom Typ aufweisend:
- eine Sendevorrichtung (14) für digitale Daten aufweisend ein Hauptmodul (26) zur Kommunikation mit dem Computernetzwerk (12) und einem Sekundärmodul (30) zur Funkkommunikation auf kurze Distanz, wobei die Sendevorrichtung (14) geeignet ist, digitale Daten zu erzeugen;
- mindestens eine Empfangsvorrichtung (24A; 24B) für digitale Daten aufweisend ein Hauptmodul (31A; 31B) zur Kommunikation mit einem Computernetzwerk (12) und einem Sekundärmodul (32A; 32B) zur Funkkommunikation auf kurze Distanz, wobei die Empfangsvorrichtung (24A; 24B) geeignet ist, die durch die Sendevorrichtung (14) erzeugten Daten zu verwenden;
charakterisiert:
- Dadurch, dass sie außerdem eine tragbare Übertragungsvorrichtung (25) für digitale Daten aufweist aufweisend:
- einen Prozessor (34);
- einen Speicher (36), geeignet zum Speichern der digitalen Daten und mindestens eines Steuerprogramms der Sendevorrichtung (25), die von dem Prozessor (34) ausgeführt wird;
- ein einzelnes Modul (37) zur Funkkommunikation auf kurze Distanz, das dazu geeignet ist, mit dem Sekundärmodul zur Kommunikation (30) der Sendevorrichtung (14) zu kommunizieren, um die von der Sendevorrichtung (14) erzeugten digitalen Daten zurückzugewinnen, um sie in dem Speicher (36) zu speichern, wenn die Übertragungsvorrichtung (25) in der Nähe der Sendevorrichtung (14) ist, und mit dem Sekundärmodul zur Kommunikation (32A; 32B) der Empfangsvorrichtung (24A; 24B) zu kommunizieren, um an die Empfangsvorrichtung (24A; 24B) zumindest bestimmte der in dem Speicher (36) gespeicherten digitalen Daten zu übertragen, wenn die Übertragungsvorrichtung (25) in der Nähe der Empfangsvorrichtung (24A; 24B) ist;
- dadurch, dass die Sendevorrichtung (14) geeignet ist, digitale Daten über das Computernetzwerk (12) zu der Empfangsvorrichtung (24A; 24B) zu schicken; und
- dadurch, dass die Empfangsvorrichtung (24A; 24B) eine Lautsprecherbox ist, die geeignet ist, Schallwellen ausgehend von den digitalen Daten, die von der Sendevorrichtung (14) ausgegeben werden und über das Computernetzwerk (12) geliefert werden, auszugeben.

2. Anordnung (10) gemäß Anspruch 1, dadurch charakterisiert, dass die Übertragungsvorrichtung (25) außerdem eine Quelle (38) zur elektrischen Versorgung des Prozessors (34), des Speichers (36) und des Kommunikationsmoduls (37) aufweist.

3. Anordnung (10) gemäß Anspruch 1 oder 2, dadurch charakterisiert, dass das einzelne Modul zur Kommunikation (37) der Übertragungsvorrichtung (25) und die Sekundärmodule zur Kommunikation (30; 32A; 32B) der Sendevorrichtung (14) und der Empfangsvorrichtung (24A; 24B) mit einem Kommunikationsprotokoll gemäß der Norm IEEE 802.15.4 kompatibel sind.

4. Anordnung (10) gemäß einem der vorhergehenden Ansprüche, dadurch charakterisiert, dass das einzelne Modul zur Kommunikation (37) der Sendevorrichtung (14) dazu geeignet ist, mit jedem der Sekundärmodule zur Funkkommunikation (30; 32A; 32B) der Sendevorrichtung (14) und der Empfangsvorrichtung (24A; 24B) in einer Distanz unter 10 cm zu kommunizieren.

5. Anordnung (10) gemäß einem der vorhergehenden Ansprüche, dadurch charakterisiert, dass jedes von dem einzelnen Modul zur Kommunikation (37) und den Sekundärmodulen zur Kommunikation (30; 32A; 32B) zum Definieren eines Abdeckungsfelds geeignet ist, in dem dieses Modul zur Kommunikation (37; 30; 32A; 32B) geeignet ist, mit den anderen Modulen zur Kommunikation (37; 30; 32A; 32B) über Funkwellen zu kommunizieren.

6. Anordnung (10) gemäß einem der vorhergehenden Ansprüche, charakterisiert:
- Dadurch, dass jede von der Sendevorrichtung (14) und der Empfangsvorrichtung (24A; 24B) eine Kontaktfläche aufweist; und
- dadurch, dass das einzelne Modul zur Kommunikation (37) der Sendevorrichtung (25) geeignet ist, mit jedem der Sekundärmodule zur Funkkommunikation (30; 32A; 32B) der Sendevorrichtung (14) und der Empfangsvorrichtung (24A; 24B) zu kommunizieren und mit der Kontaktfläche der Sendevorrichtung (14) oder der Empfangsvorrichtung (24A; 24B) in Kontakt ist.

7. Anordnung (10) gemäß einem der vorhergehenden Ansprüche, dadurch charakterisiert, dass die Hauptmodule zur Kommunikation (26; 31A; 31B) der Sendevorrichtung (14) und der Empfangsvorrichtung (24A; 24B) mit einem Kommunikationsprotokoll gemäß der Norm IEEE 802.15.4 kompatibel sind.

8. Anordnung (10) gemäß einem der vorhergehenden Ansprüche, dadurch charakterisiert, dass die Hauptmodule zur Kommunikation (26; 31A; 31B) der Sendevorrichtung (14) und der Empfangsvorrichtung (24A; 24B) mit einem Kommunikationsprotokoll vom Typ CPL kompatibel sind.

9. Anordnung (10) gemäß einem der vorhergehenden Ansprüche, dadurch charakterisiert, dass die von der Sendevorrichtung (14) erzeugten digitalen Daten Daten zur Konfiguration des Computernetzwerks (12) aufweisen, die es der Empfangsvorrichtung (24A; 24B) erlauben, eine gesicherte Verbindung mit dem Computernetzwerk (12) aufzubauen.

10. Verfahren zum Übertragen von digitalen Daten in der Anordnung (10) von elektronischen Vorrichtungen gemäß einem der vorhergehenden Ansprüche, dadurch charakterisiert, dass es die folgenden Schritte aufweist:
- Erzeugung von digitalen Daten durch die Sendevorrichtung (14);
- Wiedergewinnung der digitalen Daten durch die Übertragungsvorrichtung (25) und ihre Speicherung in dem Speicher (36) nach einer von einem Benutzer vorgenommenen Annäherung der Übertragungsvorrichtung (25) an die Sendevorrichtung (14);
- Wiedergewinnung der digitalen Daten durch die Empfangsvorrichtung (24A; 24B) nach einer von einem Benutzer vorgenommenen Annäherung der Übertragungsvorrichtung (25) an die Empfangsvorrichtung (24; 24B);
- Verwendung der digitalen Daten durch die Empfangsvorrichtung (24A; 24B), die diese digitalen Daten empfangen hat.

## Claims

1. An assembly (10) of electronic devices intended to be connected to at least one computer network (12), of the type including:
- a device (14) for emitting digital data comprising a main communication module (26) with the computer network (12) and a secondary short range radioelectric communication module (30), the emitting device (14) being able to generate digital data;
- at least one receiving device (24A; 24B) for digital data comprising a main communication module (31A; 31B) with the computer network (12) and a secondary short range radioelectric communication module (32A; 32B), the receiving device (24A; 24B) being able to use the digital data generated by the emitting device (14);
**characterized**:
- **in that** it further includes a portable transmitter device (25) for digital data comprising:
- a processor (34);
- a memory (36) able to store the digital data and at least one piece of control software of the transmitter device (25), executed by said processor (34);
- an unique short range radioelectric communication module (37) able to communicate with the secondary communication module (30) of the emitting device (14) for recovering the digital data generated by the emitting device (14) in order to store them in said memory (36) when the transmitter device (25) is in proximity to the emitting device (14), and with the secondary communication module (32A; 32B) of the receiving device (24A; 24B) for transmitting to the receiving device (24A; 24B) at least some of the digital data stored in said memory (36) when the transmitter device (25) is in proximity to the receiving device (24A; 24B);
- **in that** the emitting device (14) is able to send digital data to the receiving device (24A ; 24B) via the computer network (12); and
- **in that** the receiving device (24A; 24B) comprises an acoustic chamber able to emit sound waves from the digital data stemming from the emitting device (14) and delivered by the computer network (12).

2. The assembly (10) according to claim 1, **characterized in that** the transmitter device (25) further includes an electric power supply source (38) of said processor (34), of said memory (36) and of said communication module (37).

3. The assembly (10) according to claim 1 or 2, **characterized in that** the unique communication module (30) of the transmitter device (25) and the secondary communication modules (30; 32A; 32B) of the emitting device (14) and of the receiving device (24A; 24B) are compatible with a communication protocol compliant with the IEEE 802.15.4 standard.

4. The assembly (10) according to any of the preceding claims, **characterized in that** the unique communication module (37) of the transmitter device (14) is able to communicate with each of the secondary radioelectric modules (30; 32A; 32B) of the transmitter device (14) and of the receiver device (24A; 24B) from a distance of less than 10 cm.

5. The assembly (10) according to any of the preceding claims, **characterized in that** each of the unique communication module (37) and of the secondary communication modules (30; 32A; 32B) is able to define a coverage field in which this communication module (37; 30; 32A; 32B) is able to communicate with the other communication modules (37; 30 ; 32A; 32B) via radioelectric waves.

6. The assembly (10) according to any of the preceding claims, **characterized**:
- **in that** each of the emitting device (14) and of the receiving device (24A ; 24B) includes a contact area; and
- **in that** the unique communication module (37) of the transmitter device (25) is able to communicate with each of the secondary radioelectric communication modules (30; 32A; 32B) of the emitting device (14) and of the receiving device (24A; 24B) while being in contact with the contact area of the emitting device (14) or of the receiving device (24A; 24B).

7. The assembly (10) according to any of the preceding claims, **characterized in that** the main communication modules (26; 31A; 31B) of the emitting device (14) and of the receiving device (24A; 24B) are compatible with a communication protocol compliant with the IEEE 802.11 standard.

8. The assembly (10) according to any of the preceding claims, **characterized in that** the main communication modules (26; 31A; 31B) of the emitting device (14) and of the receiving device (24A; 24B) are compatible with a communication protocol of the PLC type.

9. The assembly (10) according to any of the preceding claims, **characterized in that** the digital data generated by the emitting device (14) comprise configuration data of the computer network (12) allowing the receiving device (24A; 24B) to establish a secured connection with the computer network (12).

10. A method for transferring digital data in the assembly (10) of electronic devices according to any of the preceding claims, **characterized in that** it comprises the following steps:
- generating digital data by the emitting device (14);
- recovering digital data with the transmitter device (24A; 24B) and storing them in the memory (36) after bringing the transmitter device (25) closer to the emitting device (14), carried out by a user;
- recovering digital data with the receiving device (24A; 24B) after bringing the transmitter device (25) closer to the receiving device (24A; 24B), carried out by the user;
- using the digital data with the receiving device (24A; 24B) having received these digital data.
